# EUROPEAN PATENT APPLICATION

(11) **EP 2 518 384 A2**
(43) Date of publication of application: **31.10.2012**
(21) Application number: 12005373.1
(22) Date of filing: 09.03.2010
(51) Int. Cl.: F21K 99/00, F21V 8/00, F21Y 113/00, F21Y 105/00, F21Y 101/02, G02B 6/00

(54) **Illumination device**

(30) Priority: 18.06.2009 JP 2009144842; 23.02.2010 JP 2010036765
(62) Divisional of application: 10789131.9
(71) Applicant: S.K.G. Co., Ltd., Aichi 465-0095 (JP)
(72) Inventor: Yagi, Toshiaki, Ichinomiya-shi Aichi 491-0825 (JP); Nakashima, Hiroshi, Ichinomiya-shi Aichi 491-0825 (JP); Sakamoto, Mitsuhide, Ichinomiya-shi Aichi 491-0825 (JP); Hatano, Eisuke, Ichinomiya-shi Aichi 491-0825 (JP); Ando, Junichi, Ichinomiya-shi Aichi 491-0825 (JP)
(74) Representative: Polypatent

(57) **Abstract**

This invention has an object to provide an illumination device capable of selecting freely the contour of the light emitting portions and the light distribution feature according to the shape of the institution installed with this device and to user's desires, suppressing light brightness differences as well as light intensity profile differences due to viewing angle upon improving the light outputting efficiency, and being manufactured with lower costs. The invented illumination device (100) includes plural light guide plates (110) formed with reflection dots reflecting a shape of processing dots by pressing the matrix shaped processing dots provided at an ultrasound processing horn, an LED light source for rendering LED light enter into the light guide plates, and a holding member (120) for holding the LED light source, wherein the plural light guide plates (110) are arranged to have a major surface having the reflection dots to be angled differently.

## Description

### Background of the Invention

### Field of the Invention

This invention relates to an illumination device three-dimensionally formed with light guide plates in a small quantity but many kinds.

### Description of Related Art

In an art of illumination devices with LED (light emitting device) lights as the light source, particularly, in types of electric light bulb lamps, a structure formed with, e.g., many white color light emitting devices arranged three-dimensionally has been known for gaining three-dimensional light distribution feature (e.g., see Patent Document #1).

In relation to illumination devices using LEDs, a structure of an illumination device has been known for improving heat dissipation property of the LED without increasing manufacturing costs by arranging plural fin heat sinks in a projecting manner on an outer contour of the device's housing and arranging LEDs closely at an inner surface (e.g., see Patent Document #2).

In relation to LED lamps in electric light bulb types using LEDs as the light source, a structure of an LED lamp in an electric light bulb type has been known for maintaining its heat dissipation property in a case that a high power LED board is used by directly or indirectly contacting to a light source attachment portion of a holder the other side of the LED board on which LED chips are mounted on a metal board via an insulation adhesive (e.g., see Patent Document #3).

### Prior Art Materials

### Patent Documents

Patent Document #1: Japanese Patent Application Publication No.2005-310561
Patent Document #2: Japanese Patent Application Publication No.2006-040727
Patent Document #3: Japanese Patent Application Publication No.2009-037995

### Summary of the Invention

### Problems to be Solved by the Invention

With the structures described above, however, it is difficult to chose the outer shape of the light emitting portion and light distribution feature in accordance with the environment of the institution to which the illumination device is attached and with user's desires; light intensity profile may show some irregularity depending on the angle viewing the illumination device; such structures may suffer from worse light projection efficiency; and there arises a further problem on higher manufacturing costs.

It is an object of the invention, in consideration of the above technical problems, to provide an illumination device capable of selecting freely the outer shape of the light emitting portions and the light distribution feature in accordance with the shape of the institution to which this illumination device is installed and with user's desires, suppressing differences between darkness and brightness of the light as well as differences in the light intensity profile due to angle viewing the device upon improving the light outputting efficiency, and being manufactured with lower costs.

### Means for Solving the Problems

To solve the problems described above, the invented illumination device has a feature in which including a plurality of light guide plates formed with reflection dots in compliance with a shape of processing dots by pressing the processing dots in a matrix shape provided at an ultrasound processing horn, an LED light source for rendering LED light enter into the light guide plates, and a holding member for holding the LED light source, wherein the plural light guide plates are arranged to have a major surface having the reflection dots to be angled differently from a major surface of another light guide plate.

### Advantages of the Invention

According to the illumination device of this invention, the illumination device is capable of selecting freely the outer shape of the light emitting portions and the light distribution feature in accordance with the shape of the institution to which this illumination device is installed and with user's desires, suppressing differences between darkness and brightness of the light as well as differences in the light intensity profile due to angle viewing the device upon improving the light outputting efficiency, and being manufactured with lower costs.

### Brief Description of the Drawings

Fig. 1 is a side view showing an illumination device according to the first embodiment of the invention;
Fig. 2 is a top view showing the illumination device according to the first embodiment of the invention;
Figs. 3 are schematic views showing a light guide plate provided at the illumination device according to the first embodiment of the invention; (a) is a schematic view showing a front surface portion of the light guide plate; (b) is a schematic view showing a side surface portion of the light guide plate; (c) is a schematic view showing a back surface portion of the light guide plate;
Fig. 4 is a schematic view showing a part of the front surface portion of the light guide plate provided at the illumination device according to the first embodiment of the invention;

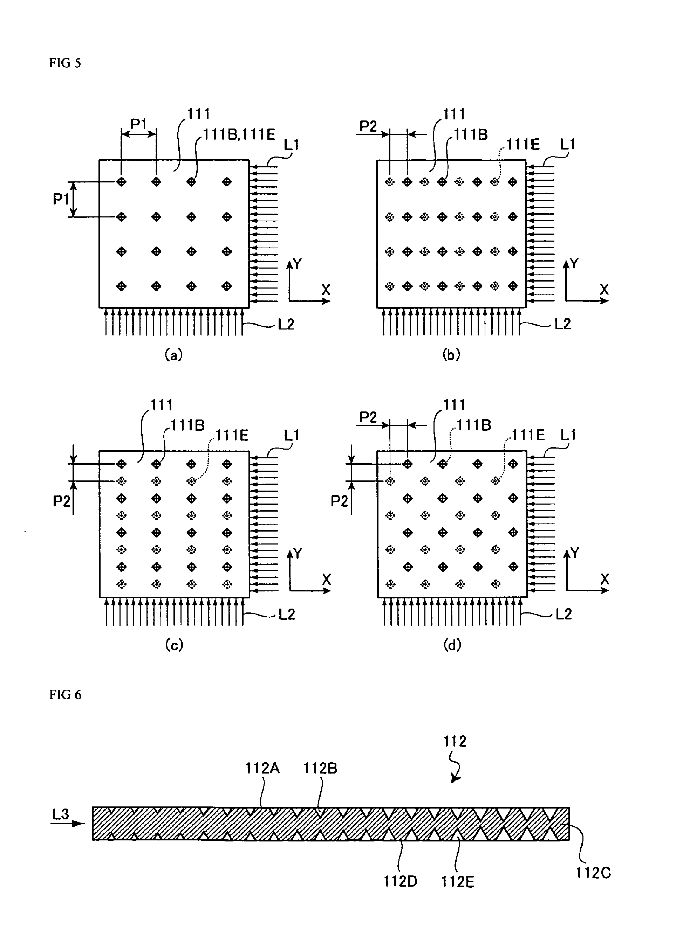

Figs. 5 are schematic views showing front surface recess pattern scars formed on the front surface portion and back surface recess pattern scars formed on the back surface portion of the light guide plate provided at the illumination device according to the first embodiment of the invention, in a see-through state; (a) is a schematic view showing a state that the back surface recess pattern scars are formed at the same position on the opposed surface with respect to the front surface recess pattern scars; (b) is a schematic view showing a state that the back surface recess pattern scars are formed at a position shifted in an X-direction by a half pitch with respect to the front surface recess pattern scars; (c) is a schematic view showing a state that the back surface recess pattern scars are formed at a position shifted in a Y-direction by a half pitch with respect to the front surface recess pattern scars; (d) is a schematic view showing a state that the back surface recess pattern scars are formed at a position shifted in the X-direction and the Y-direction respectively by a half pitch with respect to the front surface recess pattern scars;
Fig. 6 is a schematic view showing a side surface portion of the light guide plate having different depths on the front surface recess pattern scars and the back surface recess pattern scars provided at the illumination device according to the first embodiment of the invention;
Fig. 7 is a schematic view showing a side view of the light guide plate having different depths on the front surface recess pattern scars and the back surface recess pattern scars and a reflection tape adhered to the light guide plate provided at the illumination device according to the first embodiment of the invention;
Fig. 8 is a perspective view showing an illumination device according to the second embodiment of the invention;
Fig. 9 is a perspective view showing the illumination device according to the second embodiment of the invention in an exploded manner with respect to each structural member;

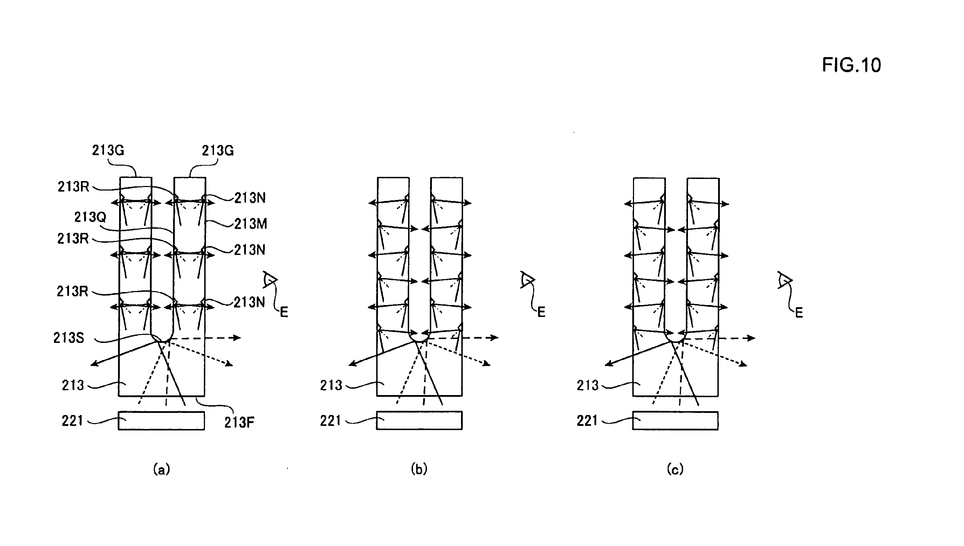

Figs. 10 are cross sections schematically showing light guide plates and light sources provided at the illumination device according to the second embodiment of the invention; (a) is a cross section showing the light guide plate in which a recess pattern and a projected pattern are formed on the opposed surfaces at the same position between the opposed surfaces and showing the light source; (b) is a cross section showing the light guide plate in which the recess pattern and the projected pattern are formed on the opposed surfaces at not the same position between the opposed surfaces and showing the light source; (c) is a cross section showing the light guide plate in which the recess pattern and the projected pattern are formed as to have deeper depths as approaching from a lower surface portion to an upper surface portion and showing the light source;

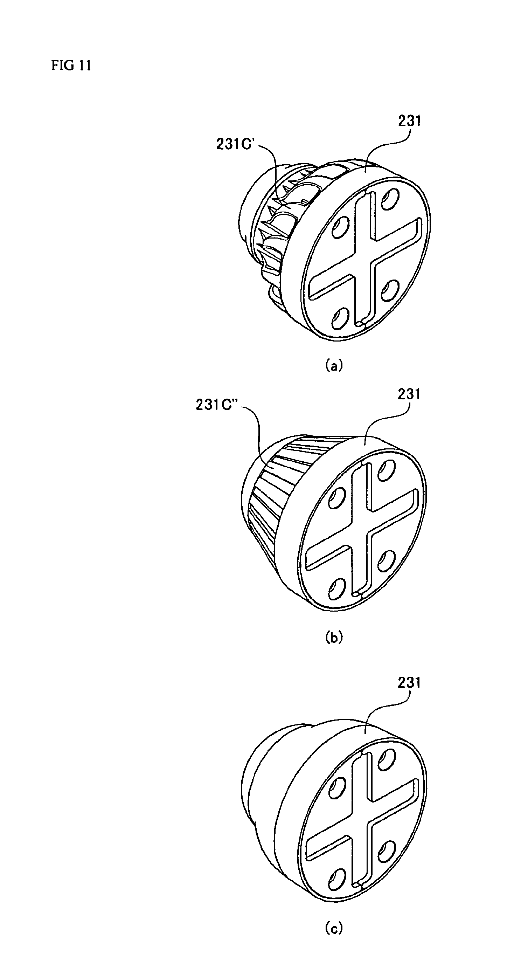

Figs. 11 are perspective view showing heat dissipating members provided at the illumination device according to the second embodiment of the invention; (a) is a perspective view showing a heat dissipating member formed with plural fin heat sinks arranged in a curving corrugate shape along an outer periphery thereof; (b) is a perspective view showing a heat dissipating member formed with plural fin heat sinks arranged in a corrugate shape along an outer periphery thereof; (c) is a perspective view showing the heat dissipating member formed with plural fin heat sinks arranged along an outer periphery thereof;
Fig. 12 is a perspective view showing an illumination device provided with plural light guide plates so combined as to form branched upper surface portions in a plural number having different heights according to the third embodiment of the invention;
Fig. 13 is a perspective view showing an illumination device provided with plural light guide plates so combined as to form four-way-branched portions in a cross shape into a trapezoid shape respectively according to the fourth embodiment of the invention;
Fig. 14 is a perspective view showing an illumination device provided with plural light guide plates so combined as to form four upper surface portions in a cross shape into an arc shape respectively according to the fourth embodiment of the invention;
Fig. 15 is a perspective view showing an illumination device provided with plural light guide plates so combined as to form four side surface portions in a cross shape into a polygon shape respectively according to the fourth embodiment of the invention;
Fig. 16 is a perspective view showing an illumination device provided with plural light guide plates so combined as to form four side surface portions in a cross shape into a streamline shape respectively according to the fourth embodiment of the invention;
Fig. 17 is a perspective view showing an illumination device provided with plural light guide plates so combined as to form recess patterns or projected patterns respectively even on upper and side surface portions branched in a plural number according to the fifth embodiment of the invention;
Fig. 18 is a perspective view showing an ultrasonic processing apparatus for embossing processing for forming recess pattern scars on a light guide plate provided at an illumination device according to the first through fifth embodiments of the invention;
Figs. 19 are schematic views showing a processing tool for embossing processing for forming recess pattern scars on a light guide plate provided at an illumination device according to the first through fifth embodiments of the invention; (a) is a schematic view showing a supporting portion of the processing tool; (b) is a schematic view showing an ultrasonic processing portion of the processing tool;
Figs.20 are schematic views showing states of embossing processing for forming recess pattern scars on a light guide plate provided at an illumination device according to the first through fifth embodiments of the invention; (a) through (e) are schematic views sequentially showing the states of the embossing processing to a processing member in compliance with a processing start reference height upon measuring the processing start reference height of the processing member prior to the embossing processing;
Fig. 21 are schematic views showing side surface portions of a light guide plate provided at an illumination device according to the first through fifth embodiments of the invention; (a) is a schematic view showing a side surface portion of the light guide plate in a case that the processing member has no curving or unevenness in thickness; (b) is a schematic view showing a side surface portion of the light guide plate in a case that the processing member has some curving or unevenness in thickness; and
Fig. 22 is a schematic view showing a side surface portion of the light guide plate in a case that the processing member has some curving or unevenness in thickness in manufacture according to a prior art.

### Embodiments in which the Invention is employed

Hereinafter, with reference to the drawings, preferred embodiments according to an illumination device of the invention are described. It is to be noted that the illumination device of the invention is not limited to the following description, and can be modified in an appropriate manner as far as used within a scope of the invention.

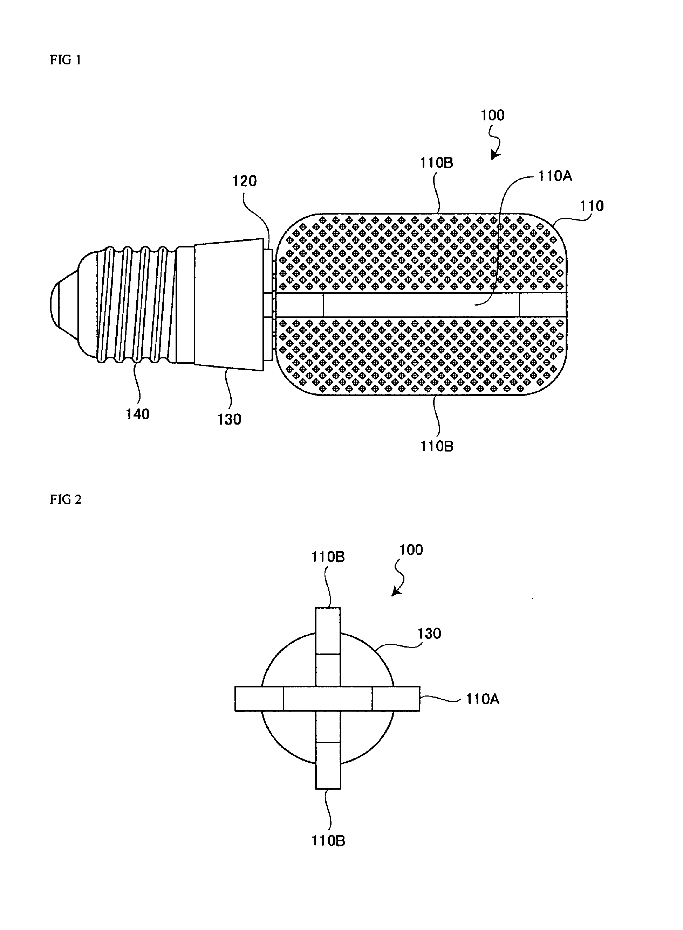

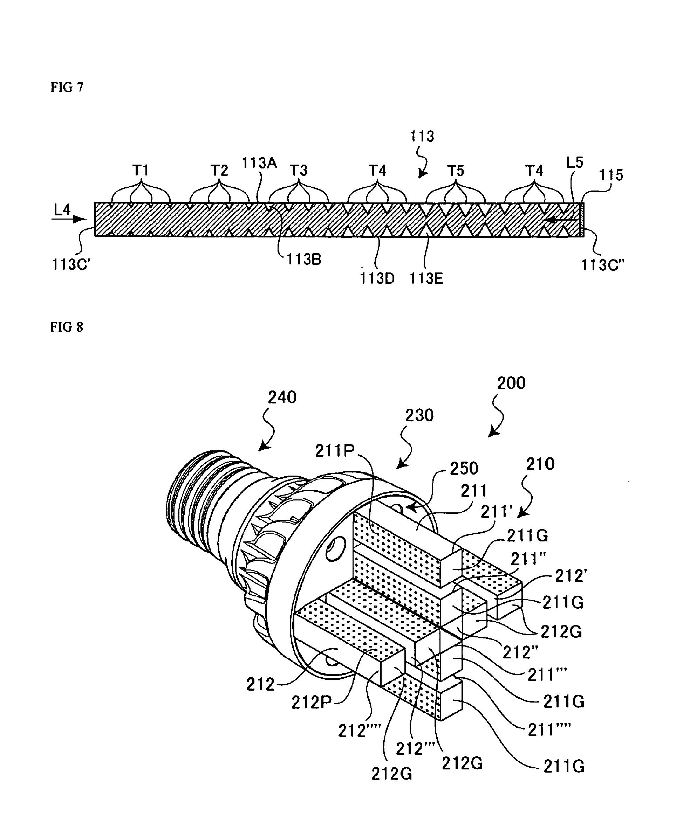

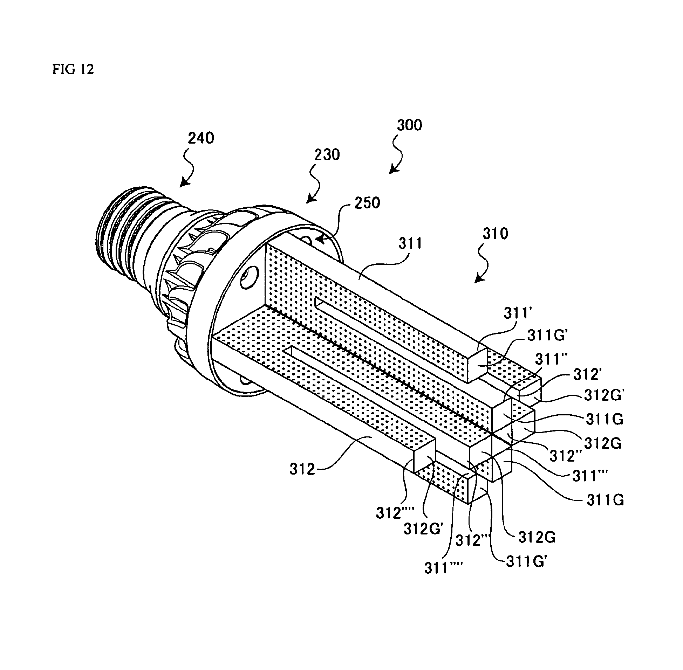

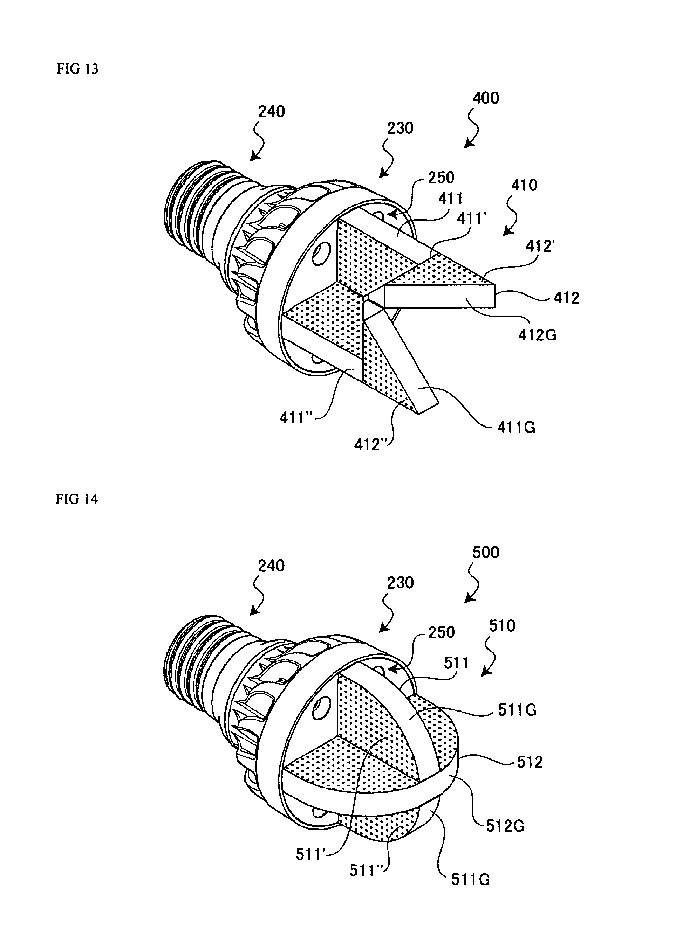

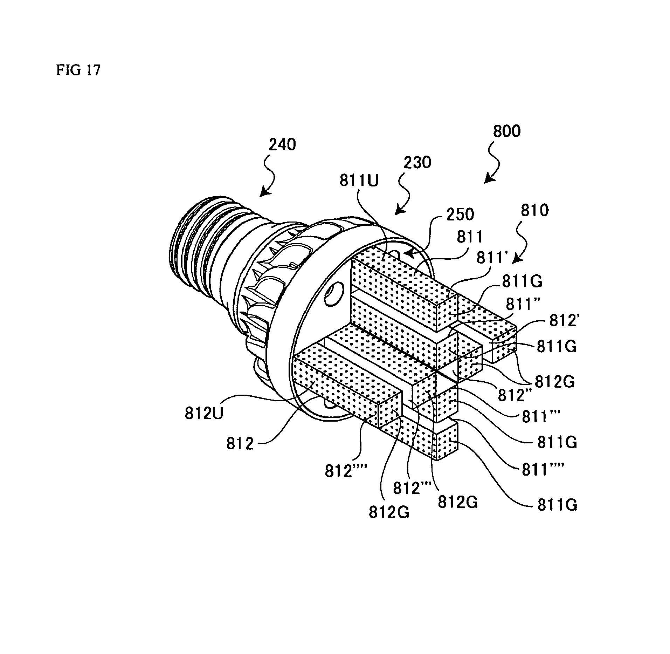

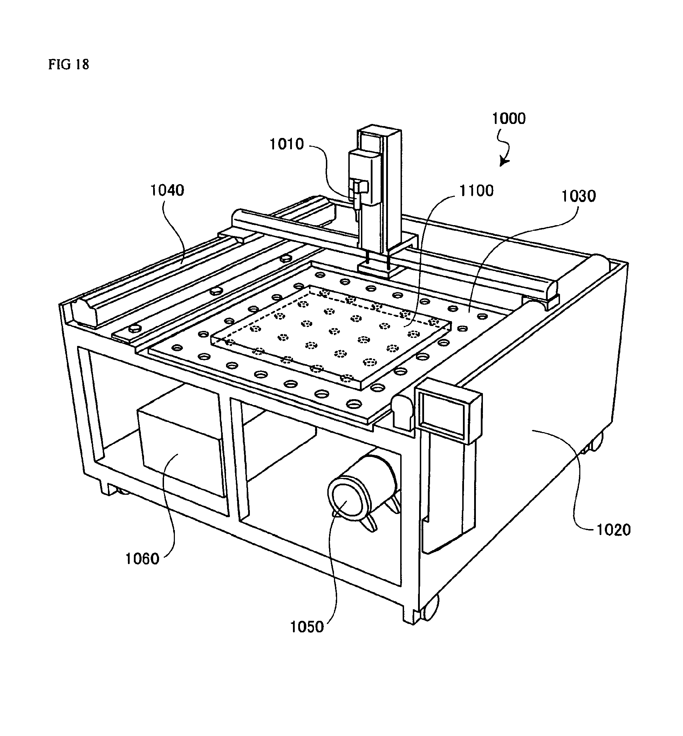

In the description below, first, referring to Fig. 1 through Fig. 7, the structure of an illumination device according to the first embodiment of the invention is described. Next, referring to Fig. 8 through Fig. 11, the structure of an illumination device according to the second embodiment of the invention is described. Referring to Fig. 12, the structure of an illumination device according to the third embodiment of the invention is described. Referring to Fig. 13 through Fig. 16, the structure of an illumination device according to the fourth embodiment of the invention is described. Referring to Fig. 17, the structure of an illumination device according to the fifth embodiment of the invention is described. Finally, referring to Fig. 18 through Fig. 22, a manufacturing method for light guide plate provided at an illumination device according to the first to fifth embodiment of the invention is described.

### [First Embodiment]

Referring to Fig. 1 through Fig. 7, the structure of an illumination device 100 according to the first embodiment of the invention is described specifically.

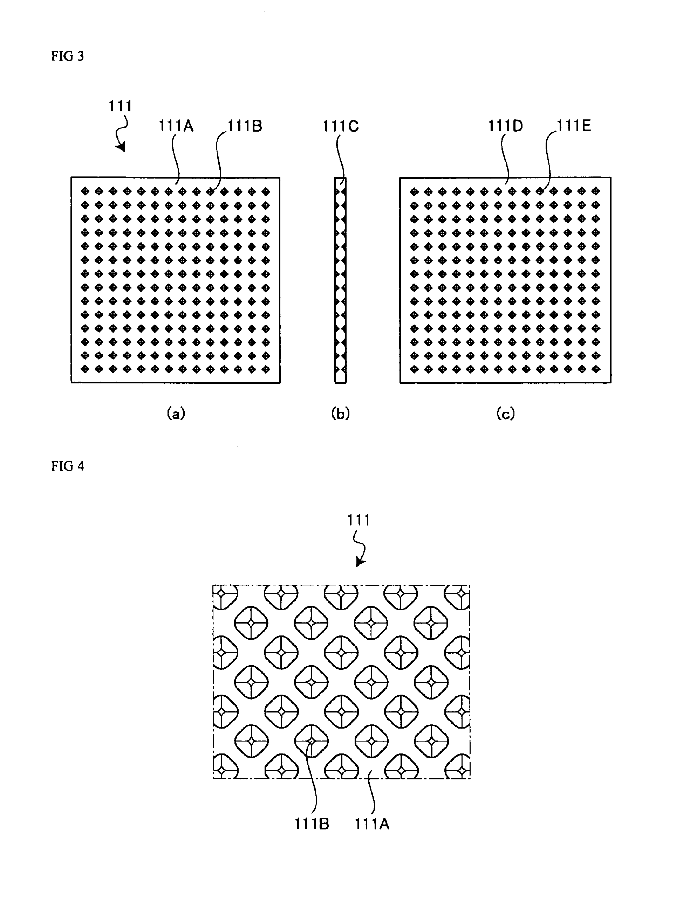

The illumination device 100 is constituted of one or more of light guide plates 110, an LED unit 120, a housing 130, and a screw fitting 140. First, the whole structure regarding the illumination device 100 is described in reference to Fig. 1 and Fig. 2, and then, details of the light guide plate 110 as an important structure in the illumination device 100 are described in reference to Fig. 3 through Fig. 7.

First, the whole structure regarding the illumination device 100 is described specifically in reference to Fig. 1 and Fig. 2.

The light guide plate 110 forming the illumination device 100 is made of a light guide plate 110A and a light guide plate 110B. The light guide plate 110A is formed in a shape similar to, e.g., a lamp shape by cutting fabrication or the like treating four corners of the plate shaped light guide plate as shown in Fig. 1 and Fig. 2. The light guide plate 110B is secured by adhering to a center of the double sides of the light guide plate 110A respectively. More specifically, when seen from the upper surfaces of the light guide plates 110A, 110B, the light guide plates 110A, 110B are joined to each other as to form, e.g., a cross shape. The light guide plates are formed with embossing processing to a processing member. It is to be noted that a detailed description of the light guide plate 110 is described in reference to Fig 3 through Fig. 7.

The LED unit 120 constituting the illumination device 100 is an LED light source, formed of a bar shaped member made of a heat resistance plastic and arranged with one or more of white LEDs. The LED unit 120 in this type is formed to have a prescribed length in compliance with the length of the side surface portion of the each light guide plate 110A, 110B as shown in Fig. 1. It is to be noted that the LED unit 120 can be used upon being cut to have a suitable length in compliance with the length of the side surface portion of the each light guide plate. Plural white LEDs may be provided for the LED unit 120 made in a united body in the cross shape. Diffused light is generated respectively by entering white LED light into the light guide plates by application of drive current to the white LEDs and by radiating the white LED light to recess pattern scars formed on a front surface portion and a back surface portion of the light guide plates. The LED unit 120 is secured by adhering to the light guide plate 110A and the light guide plate 110B. The LED arranged at the LED unit 120 is made of an LED having a color among white, red, blue, and green, or a combination of the LEDs having such a color.

The housing 130 constituting the illumination device 100 is formed, as shown in Fig. 1, of, e.g., a heat resistance plastic in an approximately corn shape. The LED unit 120 is secured by, e.g., adhering or screwing with screws not shown, to one end of the housing 130 thus formed. The illumination device 100 prevents the housing 130 from being unable to be attached to an illumination facility due to interference with the illumination facility when attached to the conventional illumination facility by forming the housing 130 in basically the same outer shaper as the conventional electric light bulb housing.

The screw fitting 140 constituting the illumination device 100 is, as shown in Fig. 1, for rendering the illumination device 100 contact to an electric light bulb socket not shown. The screw fitting 140 thus formed is made of, e.g., a heat resistance plastic in an approximately cylindrical shaped portion, and is formed with a metal for supplying electricity to LEDs arranged at the illumination device 100 at a part of the outer periphery thereof. The housing 130 is secured to the screw fitting 140 by adhering thereto or by insertion with pressure. The screw fitting 140 allows the illumination device 100 to be attached to the conventional electric light bulb socket by forming itself in substantially the same outer shape and specification as the screw socket provided at the conventional electric light bulb. More specifically, the diameter of the screw fitting 140 is for example 26 mm in diameter as a general screw fitting size of the electric light bulb. The housing 130 and the screw fitting 140 can be formed as a united body for forming a holding member for holding the LED unit 120.

Next, referring to Fig. 3 through Fig. 7, details of the light guide plate 110 as an important structure regarding the illumination device 100 are described specifically.

It is to be noted that a light guide plate 111 as a basic structural example of the light guide plate 110 is described first in referring to Fig. 3 through Fig. 5; a light guide plate 112 as an applied example of the light guide plate 111 is next described in referring to Fig. 6; and finally, a light guide plate 113 as an applied example of the light guide plate 112 is next described in referring to Fig. 7.

First, light guide plate 111 as a basic structural example of the light guide plate 110 is described specifically in referring to Fig. 3 through Fig. 5.

As shown in Fig. 3 and Fig. 4, the light guide plate 111 is made of, e.g., a polymethylmethacrylate resin plate, and is formed of a plate shaped portion in a prescribed size on which plural recess pattern scars are formed. More specifically, the size of the plate shaped portion is in a rectangular shape from 100mm square to 1450 mm x 1030 mm equivalent to B0 size, and corresponds to the thickness from 4 mm to 12 mm. The light guide plate 111 is fabricated into a prescribed size in compliance with the specification of the illumination device 100. As shown in Fig. 1, front surface portion recess pattern scars 111B are formed on front surface portion 111 A of the light guide plate 111, and back surface portion recess pattern scars 111E are formed on back surface portion 111D of the light guide plate 111. The recess pattern scars are formed from a pyramid shaped scar having a longer diameter of 0.6 mm and a depth of 0.4 mm, and formed of a matrix shaped molding scar structured with a pitch of, e.g., 1.2, 1.5, 2.0, or 8.0 mm.

As shown in Fig. 5, the LED light is radiated to the front surface portion recess pattern scars 111 B formed on front surface portion 111 A of the light guide plate 111 and to back surface portion recess pattern scars 111 E formed on back surface portion 111D. More specifically, in respective Figures from Fig. 5(a) to 5(d), incident light L1 of the LED light is radiated to the recess pattern scars in the horizontal direction X in Fig. 5. Similarly, in respective Figures from Fig. 5(a) to 5(d), incident light L2 of the LED light is radiated to the recess pattern scars in the horizontal direction Y in Fig. 5. The light guide plate 111 disposed at the illumination device 100 has a structure to which the LED light enters in only one direction either of the horizontal direction X or the vertical direction Y of the light guide plate 111 as shown in Fig. 5, but a structure to which the LED light enters in two directions is described for the purpose of references.

Hereinafter, described are optical characteristics under three conditions in which the back surface portion recess pattern scars 111 E are shifted by a half pitch P2 with respect to the front surface portion recess pattern scars 111B as shown in Fig. 5(b) through 5(d) where a state that the front surface portion recess pattern scars 111 B and the back surface portion recess pattern scars 111E as shown in Fig. 5 are formed at the same position between the double sides is set to a reference condition, in regarding the optical characteristics in relation to the recess pattern scars formed on the light guide plate 111.

Optical characteristics of the light guide plate 111 under the condition in which the back surface portion recess pattern scars 111 E are shifted by the half pitch P2 in the X direction with respect to the front surface portion recess pattern scars 111B as shown in Fig. 5(b), are described in comparison with Fig. 5(a). Under this condition, the density recognizable by viewing the recess pattern scars formed on the light guide plate 111 in the X direction recognizable from a side of the front surface portion 111A of the light guide plate 111 are twice in comparison with the case in Fig. 5(a). Therefore, in comparison with the case in Fig. 5(a), differences between light's darkness and brightness become small because bright points made from the recess pattern scars recognizable from the side of the front surface portion 111A of the light guide plate 111 are made twice in the X direction. The density recognizable by viewing the recess pattern scars formed on the light guide plate 111 in the Y direction recognizable from the side of the front surface portion 111 A of the light guide plate 111 are the same as the case in Fig. 5(a). Therefore, in comparison with the case in Fig. 5(a), differences between light's darkness and brightness are the same in the Y direction.

Optical characteristics of the light guide plate 111 under the condition in which the back surface portion recess pattern scars 111 E are shifted by the half pitch P2 in the Y direction with respect to the front surface portion recess pattern scars 111 B as shown in Fig. 5(c), are described in comparison with Fig. 5(a). Under this condition, the density recognizable by viewing the recess pattern scars formed on the light guide plate 111 in the Y direction recognizable from the side of the front surface portion 111A of the light guide plate 111 are twice in comparison with the case in Fig. 5(a). Therefore, in comparison with the case in Fig. 5(a), differences between light's darkness and brightness become small because diffused light made from the recess pattern scars recognizable from the side of the front surface portion 111 A of the light guide plate 111 is made twice in the Y direction. The density recognizable by viewing the recess pattern scars formed on the light guide plate 111 in the X direction recognizable from the side of the front surface portion 111A of the light guide plate 111 are the same as the case in Fig. 5(a). Therefore, in comparison with the case in Fig. 5(a), differences between light's darkness and brightness are the same in the X direction.

Similarly, optical characteristics of the light guide plate 111 under the condition in which the back surface portion recess pattern scars 111 E are shifted by the half pitch P2 in both of the X, Y directions with respect to the front surface portion recess pattern scars 111B as shown in Fig. 5(d), are described in comparison with Fig. 5(a). Under this condition, the density recognizable by viewing the recess pattern scars formed on the light guide plate 111 in the X, Y directions recognizable from the side of the front surface portion 111A of the light guide plate 111 are twice respectively in comparison with the case in Fig. 5(a). Therefore, in comparison with the case in Fig. 5(a), differences between light's darkness and brightness become small respectively because diffused light made from the recess pattern scars recognizable from the side of the front surface portion 111 A of the light guide plate 111 is made twice in both of the X, Y direction.

As described above, the light guide plate 111 can have arbitrarily selectable optical characteristics by forming the position of the back surface portion recess pattern scars 111E with respect to the front surface portion recess pattern scars 111 B to be shifted in the X, Y directions as described above in reference to Fig. 5(a) through 5(d). Under the condition shown in Fig. 5(d), the differences between light's darkness and brightness become small in each of the X, Y directions, so that this invented device can obtain good optical characteristics.

Subsequently, the light guide plate 112 as an applied example of the light guide plate 111 is described specifically in dereference to Fig. 6.

The light guide plate 112 is characterized in that depths of the recess pattern scars of the front surface portion and the back surface portion are changed in a stepwise manner as different from the front surface portion recess pattern scars 111B and the back surface portion recess pattern scars 111E having approximately the same depths formed in the light guide plate 111, as shown in Fig. 6. More specifically, when the light guide plate 112 is viewed from a side surface portion 112C, the recess pattern scars are formed so that the recess pattern scars of the front surface and the back surface on the right side in Fig. 6 become deeper in the stepwise manner in comparison with the depths of the recess pattern scars of the front surface and the back surface on the left side in Fig. 6. When incident light L3 of the LED light is emitted from the side surface portion 112C on the left side in Fig. 6, the diffused light can be outputted evenly by changing the reflecting area of the recess pattern scars closely located on the left side in Fig. 6 from small one to large one, because the light density becomes higher as located closer to the light source from its optical characteristics and becomes lower as located remoter. That is, the light guide plate 112 can make the output of the diffused light averaged more than the light guide plate 111. Fabrication of these recess pattern scars becomes effective when used with one side light source.

Finally, the light guide plate 113 as an applied example of the light guide plate 112 is described specifically in reference to Fig. 7.

The light guide plate 113 is, as shown in Fig. 7, characterized in that depths of the recess pattern scars of the front surface portion and the back surface portion are changed in a stepwise manner as different from the front surface portion recess pattern scars 111 B and the back surface portion recess pattern scars 111E having approximately the same depths formed in the light guide plate 111 and in that, for example, a reflection tape 115 made of a metal formed in a thin film shape having a high reflection rate for the light of the visible light range is adhered on one side of the side surface portion of the light guide plate 113. More specifically, regarding the structure of the light guide plate 113, the depths of front surface portion recess pattern scars 113B on the front surface portion 113A and the depths of back surface portion recess pattern scars 113E on the back surface portion 113D are formed to be deeper in a stepwise manner respectively from a side surface portion 113C' on the left side in Fig. 7 toward a side surface portion 113C" on the right side. However, the depths of the front surface portion recess pattern scars 113B on the front surface portion 113A and the depths of back surface portion recess pattern scars 113E on the back surface portion 113D are formed to be correlatively shallow on the side surface portion 113C" at the right end in Fig. 7. More specifically, for example, on the depths of front surface portion recess pattern scars 113B on the front surface portion 113A, the recess pattern scars T1 are shallowest whereas the recess pattern scars T5 are deepest among the depths of the recess pattern scars; the recess pattern scars have a relation of T1 < T2 < T3 < T4 < T5.

In association with the light guide plate 113, when incident light L4 of the LED light is emitted from the side surface portion 113C' on the left side in Fig. 7, diffused light can be outputted evenly at the front surface portion 113A and the back surface portion 113D by changing the reflecting area of the recess pattern scars from small one to large one from the left side in Fig. 7, because the light density becomes higher as located closer to the light source from its optical characteristics and becomes lower as located remoter. Reflection light L5 occurs upon reflection of the incident light L4 of the LED light at the side surface portion 113C" by the reflection tape 115 adhering to the side surface portion 113C" of the light guide plate 113. Because the reflection light L5 is converted to diffused light at the recess pattern scars, a rate converted from the LED light into the diffused light increases. The reflection light L5 thus generated affects the diffused light at recess pattern scars located adjacently to the side surface portion 113C". Accordingly, both of the depths of the front surface portion recess pattern scars 113B on the front surface portion 113A and the depths of back surface portion recess pattern scars 113E on the back surface portion 113D are formed to be correlatively shallow at the side surface portion 113C". Thus, in the structure adhering the reflection tape 115 on the one side of the side surface portion of the light guide plate 113, diffused light can be outputted evenly corresponding to the required light emitting surface size. That is, the light guide plate 113 can render the output of the diffused light further more averaged than the light guide plate 112.

As described above, according to the illumination device 100 of the first embodiment, the device can have arbitrarily selectable optical characteristics in association with differences between light's darkness and brightness by forming the position of the back surface portion recess pattern scars with respect to the front surface portion recess pattern scars of the light guide plate 111 to be shifted in the X, Y directions. For example, the differences between light's darkness and brightness are made small in each of the X, Y directions by forming the position of the back surface portion recess pattern scars with respect to the front surface portion recess pattern scars to be shifted by the half pitch P2 in the X, Y directions. The output of the diffused light can be made averaged by forming different depths of the recess pattern scars of the front surface portion and the back surface portion in the stepwise manner in the way of the light guide plate 112, or by forming different depths of the recess pattern scars of the front surface portion and the back surface portion in the stepwise manner in the way of the light guide plate 113 where the reflection tape 115 made of the metal formed in the thin film shape having the high reflection rate for the light of the visible light range is adhered on one side of the side surface portion.

According to the illumination device 100 of the first embodiment, the device can be used as indirect illumination or ornament illumination having a further wideness to the space because the differences between light's darkness and brightness are suppressed and the LED light can be changed from an area light emission to a three-dimensional light emission in a state not depending on the emission angle, by arranging the light guide plates in which the light guide plate 110A and the light guide plate 110B are joined so as to be in, e.g., an approximately cross shape. That is, according to the illumination device 110, the LED whose light is further diffused evenly can be made to radiate floors and side surfaces regardless the emission angle thereof.

According to the illumination device 100 of the first embodiment, the light guide plate is easily cut away or fabricated by cutting, so that the illumination device 100 having light emission portions in an arbitrary shape can be made easily by jointing plural light guide plates combining at a prescribed angle. The illumination device 100 having a light distribution property matching to the shape of the institutions and the desire of the users can therefore be easily manufactured.

With the illumination device 100 of the first embodiment, as described above in reference to Fig. 18 through Fig. 22, a light guide plate 1100 formed with plural reflection dots at one time reflecting processing dots formed in a matrix shape on one major surface of a processing member 1100, is provided by pressing an ultrasound processing portion 1010A of a processing tool 1010 onto the one major surface of the processing member 1100. In the manufacture of the light guide plate 100 thus fabricated, flexible dot fabrication using an ultrasound multi-horn is applicable, so that the takt time, or the cycle time relating to the manufacture can be largely reduced.

### [Second Embodiment]

Hereinafter, the structure according to an illumination device 200 of the second embodiment of the invention is described specifically in reference to Fig. 8 through Fig. 11.

The illumination device 200 of the second embodiment of the invention is characterized in that an upper surface portion of the light guide plate of a light guide portion 210 is branched off into a plural number and that the light guide portion 210 and the light source portion 220 can be replaced easily, as different from the illumination device 100 according to the first embodiment.

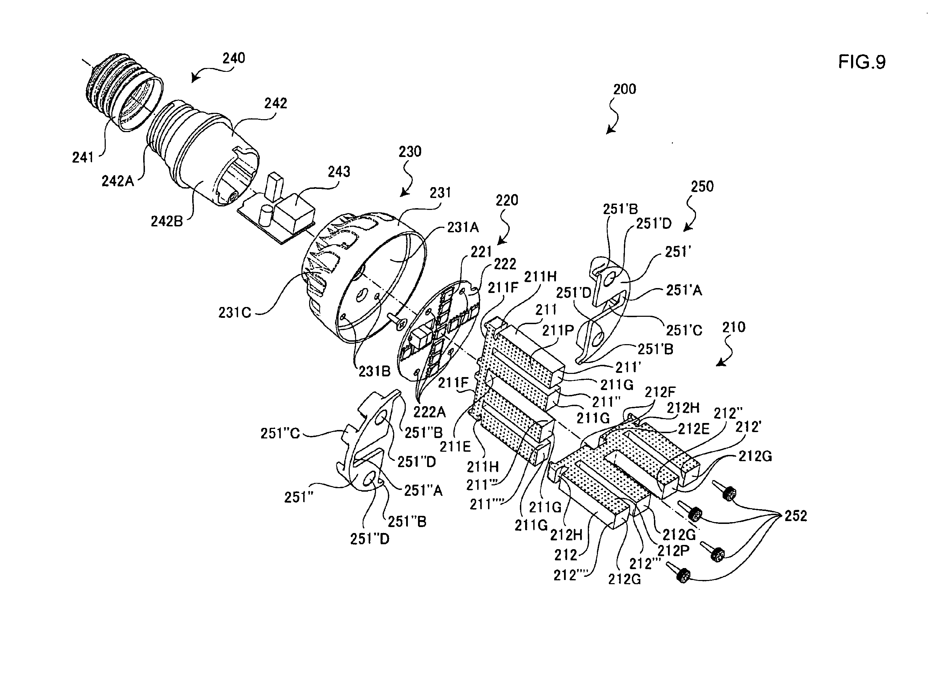

The illumination device 200 includes, as shown in Fig. 8 and Fig. 9, the light guide portion 210, the light source portion 220, a heat dissipating portion 230, a power supply portion 240, and a holding portion 250. Hereinafter, the structure of the illumination device 200 is described sequentially.

The light guide portion 210 for forming the illumination device 200 is arranged with light guide plates branched into a plural number on at least one surface of which a recess pattern, projected pattern, or recess and projected pattern for outputting diffused light is formed as shown in Fig. 9. The light guide portion 210 thus formed is constituted of a light guide plate 211 and a light guide plate 212. Hereinafter, the structure of the light guide portion 210 is described. The light guide plate 211 and the light guide plate 212 are made respectively of, e.g., an acrylic resin plate or methacrylate resin plate, and are formed in a prescribed shape. More specifically, the light guide plate 211 has an upper surface portion 211 G indented at three points, thereby branching the plate into four portions, or a branched portion 211', a branched portion 211 ", a branched portion 211"', and a branched portion 211"". Similarly, the light guide plate 212 has an upper surface portion 212G indented at three points, thereby branching the plate into four portions, or a branched portion 212', a branched portion 212", a branched portion 212"', and a branched portion 212"".

In regard to the light guide portion 210 constituting the illumination device 200, the light guide plate 212 is inserted to the light guide plate 211 so that a joint portion 21 1E formed at a recess located between the branched portion 211" and the branched portion 211"' of the light guide plate 211 and a joint portion 212E formed at a center of a lower surface portion 212F of the light guide plate 212. It is to be noted that the light guide plate 211 and the light guide plate 212 are arranged so that the lower surface portion 211 F of the light guide plate 211 comes to the same position to the lower surface portion 212F of the light guide plate 212 where the joint portion 211E and the joint portion 212E are jointed. Similarly, the light guide plate 211 and the light guide plate 212 are arranged so that the heights of the upper surface portion 211 G of the branched portion 211', the branched portion 211 ", the branched portion 211'", and the branched portion 211"" of the light guide plate 211 become the same as the heights of the upper surface portion 212G of the branched portion 212', the branched portion 212", the branched portion 212"', and the branched portion 212"" of the light guide plate 212 where the joint portion 211E and the joint portion 212E are jointed.

Similarly, regarding to the light guide plate 210 constituting the illumination device 200, the light guide plate 211 and the light guide plate 212 are formed with a pattern 211 P and a pattern 212P respectively formed in a matrix shape having a recess pattern, a projected pattern, or a recess and projected pattern for outputting diffused light. The interval between the pattern 211P and the pattern 212P is, e.g., from 2 mm to 6 mm. The optical characteristics of the light guide plate 211 and the light guide plate 212 relating to the pattern 211P and the pattern 212P are described in reference to Fig. 10 after a description about the light source portion 220. The light guide plate 211 and the light guide plate 212 may be coated with a glass coating agent not shown having functions for waterproof, dirty resistance, dustproof, etc. and may be coated with a transparent resin not shown having functions for waterproof, dirty resistance, dustproof, etc.

The light source portion 220 constituting the illumination device 200 is provided adjacently to the light guide portion 210 as shown in Fig. 9 and introduces light from the lower surface portion 211 F and the lower surface portion 212F of the light guide plate 211 and the light guide plate 212 to the interiors of the light guide plate 211 and the light guide plate 212 toward the opposed upper surface portion 211 G and the opposed upper surface portion 212G. The light source portion 220 thus structured is constituted of a light source 221 and a board 222. Hereinafter, the structure of the light source portion 220 is described. The light source 221 of the light source portion 220 is made of, e.g., LEDs (light emitting diodes) emitting in white. In Fig. 9, ten LEDs of a surface mounted type are disposed in a cross shape as an example. The light source 221 may be structured with LEDs in any of white, red, orange, yellow, green, blue, navy, and purple, or any combination of those. The light source 221 is not limited to the LED(s), and may be made of any of, e.g., organic light emission diode, fluorescent tube, cold-cathode fluorescent tube, and neon tube.

Regarding to the light source portion 220 constituting the illumination device 200, the board 222 of the light source portion 220 is a member for mounting the light source 221. The board 222 thus formed is made of, e.g., a lightweight aluminum plate having a certain rigidity and is formed in a disc shape. The board 222 may be made of a copper plate having good heat dissipation property. Similarly, the board 222 may be made of a glass epoxy resin board having good fabrication suitability.

Referring to Fig. 10, the optical characteristics of the light guide plate in association with the light guide portion 210 and the light source portion 220 are described. It is to be noted that in Fig. 10, the light guide plate 213 having a simplified structure of the light guide plate 211 and the light guide plate 212, and the light source 221 provided adjacent to the light guide plate 213 are schematically shown in a cross section. A part of the light of the light source 221 entered from the lower surface portion 213F of the light guide plate 213 can be reflected effectively at both of the two branched portions by means of an end portion 213S located between the two branched portions. Because the reflected light performs multi-reflection between one major surface 213M and the other major surface 213Q, diffused light can be generated effectively with patterns 213N formed in a plural number on the one major surface 213M and patterns 213R formed in a plural number on the other major surface 213Q. A part of the light of the light source 221 entered from the lower surface portion 213F of the light guide plate 213 generates diffused light at the patterns 213N and the patterns 213R respectively not via the end portion 213S.

That is, regarding the optical characteristics of the light guide plate, in a case of a light guide plate formed in a simple rectangular shape likewise a conventional plate, much of light entered from the lower surface portion of the light guide plate and proceeded straight is not converted into diffused light but goes straight and comes out of the upper surface portion. In a case of the light guide plate formed in, e.g., a two- branched shape likewise the light guide plate 213 according to the invention, however, the light entered from the lower surface portion 213F of the light guide plate 213 is reflected plural times at the end portion 213S located between the two branched portions as well as, e.g., between the one major surface 213M and the other major surface 213Q. During such reflections of the plural times, the light entered obliquely to, e.g., the upper surface portion 213G does not come out of the upper surface portion 213G but is reflected toward the lower surface portion 213F by light's reflection to the whole directions among respective surfaces of the light guide plate 213. Therefore, the rate of the light not converted into the diffused light after entered from the lower surface portion 213F of the light guide plate 213 and proceeded straight to be discharged from the upper surface portion 213G can be largely reduced.

In regard with the optical characteristics of the light guide plate, the plural diffused lights generated at the patterns 213N and the pattern 213R are outputted from the one major surface 213M and the other major surface 213Q of the light guide plate 213 in serving as an averaged area light source if the density of the patterns 213N and the pattern 213R formed at the light guide plate 213 is adequately high. A part of the diffused light generated at the patterns 213N of the one major surface 213M and the most parts of the diffused light generated at the patterns 213R of the other major surface 213Q are recognized by eyes E of viewers.

Accordingly, differences between light's darkness and brightness in the light guide plate 213 are reduced because the light guide plate 213 formed with a half pitch shifted between the patterns 213N formed in a plural number on the one major surface 213M and the patterns 213R formed in a plural number on the other major surface 213Q as shown in Fig. 10 (b) has an increased number of the patterns generating the diffused light recognized by eyes E of viewers rather than the light guide plate 213 formed with the same patterns' position on the opposed surfaces between the patterns 213N formed in a plural number on the one major surface 213M and the patterns 213R formed in a plural number on the other major surface 213Q as shown in Fig. 10 (a). The light intensity of the light source 221 is reduced correlatively from the lower surface portion 213C to the upper surface portion 213G of the light guide plate 213, and therefore, the intensity of the diffused light generated at the plural patterns can be averaged by raising the intensity of the diffused light generated by forming the patterns' depths to be deeper from the lower surface portion 213F toward the upper surface portion 213G of the light guide plate 213 in a stepwise manner as shown in Fig. 10(c).

The heat dissipating portion 230 constituting the illumination device 200 contacts the back surface of the board 222 of the light source portion 220 as shown in Fig. 9 and absorbs heat occurring at the light source 221 in the light source portion 220 to dissipate the heat. The heat dissipating portion 230 thus structured is made of a heat dissipating member 231. Hereinafter the structure of the heat dissipating portion 230 is described. The heat dissipating member 231 is made of, e.g., aluminum and in a hemisphere shape. A containing portion 231A for containing the board 222 of the light source portion 220 is formed inside the heat dissipating member 231. As described below, the back surface of the board 222 is secured in a state closely contacting to the containing portion 231 A by screwing a fastening member 252 of the holding portion 250 into a screw hole 231 B drilled in the containing portion 231 A via a hole 222A opened in the board 222, thereby transferring the heat generated at the light source 221 effectively to the heat dissipating member 231.

Regarding the heat dissipating portion 230 constituting the illumination device 200, plural fins 231C are arranged on an outer periphery of the heat dissipating member 231 for effectively dissipating heat by increasing its surface area as shown in Fig. 9. As for such the fin 231C, plural fins C' each made in a curved corrugated shape may be formed along the outer periphery as shown in, e.g., Fig. 11(a), and plural fins C" each made in a straight corrugated shape may be formed along the outer periphery as shown in, e.g., Fig. 11(b). As a matter of course, where a drive current value for the light source 221 is adequately low or where the electric power loss is small, no fin may be formed on the outer periphery for heat dissipation as shown in, e.g., Fig. 11(c).

The power supply portion 240 structuring the illumination device 200 is electrically connected to the light source portion 220 as shown in Fig. 9 and supplies electric power to the light source 221. The power supply portion 240 thus formed includes a power supply member 241, a housing 242, and an electric power unit 243. Hereinafter the structure of the power supply portion 240 is described. The power supply member 241 in the power supply portion 240 is made of a screw fitting screwed into a socket installed at, e.g., an indoor facility for receiving electric power supply. The diameter of the screw fitting is set to, e.g., 26 mm in diameter as a general size. The power supply member 241 is not limited to the screw fitting and may be a plug inserted to a socket for receiving electric power supply or a terminal connected to a generator or battery for receiving electric power supply.

In the power supply portion 240 structuring the illumination device 200, the housing 242 is made of, e.g., a plastic resin having an insulation property and in a cylindrical shape. The housing 242 thus formed connects to the power supply member 241 upon inserting the member to an end 242A and is jointed to the heat dissipating member 231 of the heat dissipating portion 230 upon inserting the member to another end 242B. The electric power unit 243 of the power supply portion 240 functions for dropping voltage, rectifying a direct current to a constant current, performing a pulse modulation after rectification, and removing noises in compliance with the rating of the light source 221 in use of electric power supplied via the power supply member 241. The electric power unit 243 thus formed includes, e.g., a transformer, a rectifier, and a capacitor. The electric power unit 243 is contained in a space inside a portion at which the housing 242 and the heat dissipating member 231 are fitted into each other.

The holding portion 250 structuring the illumination device 200 contacts to an end of the light guide portion 210 as shown in Fig. 9 and detachably holds at least the light guide portion 210 with respect to the heat dissipating portion 230. The holding portion 250 thus formed is constituted of a holding member 251, and the fastening member 252. Hereinafter, the structure of the holding portion 250 is described. The holding member 251 of the holding portion 250 is constituted of a pair of a holding member 251' and a holding member 251 ", each made in a half disc shape.

Regarding the holding portion 250 constituting the illumination device 200, the holding member 251' engages the light guide plate 212 upon inserting a groove portion 251'A opened at a center of the holding member 251' into an engaging portion 212H formed at a branched portion 212' of the light guide plate 212. The holding member 251' engages the light guide plate 211 upon inserting a projection portion 251'B formed at each end of the holding member 251' into a recess engaging portion 211H respectively formed at lower portions of a branched portion 211' and a branched portion 211"" of the light guide plate 211. Similarly, the holding member 251" engages the light guide plate 212 upon inserting a groove portion 251'A opened at a center of the holding member 251" into an engaging portion 212H formed at a branched portion 212"" of the light guide plate 212. The holding member 251" engages the light guide plate 211 upon inserting a projection portion 251"B formed at each end of the holding member 251 " into a recess engaging portion 211H respectively formed at lower portions of a branched portion 211' and a branched portion 211"" of the light guide plate 211.

Similarly, in regard with the holding portion 250 structuring the illumination device 200, where the light guide plate 212 is inserted into the light guide plate 211 and where the holding member 251' and the holding member 251 ", as a pair, are engaged to each other, a wall portion 251'C and a wall portion 251"C formed at an outer periphery of the holding member 251' and the holding member 251" respectively are inserted into the containing portion 231 A of the heat dissipating member 231. The fastening member 252 made of, e.g., a pan head screw is inserted through a hole 251'D and a hole 251"D respectively opened in the holding member 251' and the holding member 251 ", inserted through a hole 222A opened in the board 222, and fastened to a screw hole 231 D provided in a plural number in the containing portion 231 A by screwing the fastening member 252, thereby holding detachably the light guide portion 210 and the light guide portion 220 with respect to the heat dissipating portion 230. The light guide portion 210 and the light guide portion 220 may be held independently in a detachable manner with respect to the heat dissipating portion 230 in use of, e.g., individual fastening members.

As described above, according to the illumination device 200 of the second embodiment, the outer shape of the light emitting portion and light distribution characteristics can be freely selected by replacing the light guide portion 210 and the light guide portion 220 held at the heat dissipating portion 230 by way of the holding portion 250 so as to meet the facility environments and user's desires. According to the illumination device 200 of the second embodiment, the plural light guide plates combined three-dimensionally are arranged in the light guide portion 210, thereby suppressing differences of the light intensity profile depending on the angle of recognition by eyes. According to the illumination device 200 of the second embodiment, the surface area of the side surface portion at which the light is normally reflected in the interior of the light guide plate is increased by branching off the light guide plate in a plural number, so that the light is readily reflected in a multiple manner among the side surface portions. Therefore, the rate of the light discharged from the lower surface portion to the upper surface portion of the light guide plate is reduced, and the rate of the light converted into the diffused light with the recess and projected patterns is increased, so that light outputting efficiency can be improved.

### [Third Embodiment]

Hereinafter, the structure regarding an illumination device 300 of the third embodiment of the invention is described in reference to Fig. 12.

The illumination device 300 of the third embodiment of the invention is characterized in that the heights of the upper surface portions of the branched light guide plate are different, as different from the illumination device 200 having the same heights of the upper surface portions of the branched light guide plates according to the second embodiment. The structures of the third embodiment other than those are substantially the same as the structures described in the second embodiment. In the third embodiment, the structures different from the second embodiment are mainly described.

The illumination device 300, as shown in Fig. 12, includes the light source portion 220, the heat dissipating portion 230, the power supply portion 240, and the holding portion 250, which have substantially the same specifications as those of the illumination device 200 in the second embodiment, and a particular light guide portion 310 for the illumination device 300 of the third embodiment. Hereinafter, the light guide portion 310 structuring the illumination device 300 is described.

The light guide portion 310 structuring the illumination device 300 is, as shown in Fig. 12, provided with a combination of a light guide plate 311 and a light guide plate 312 formed with a recess pattern, a projected pattern, or a recess and projected pattern for outputting the diffused light. The light guide plate 311 and the light guide plate 312 have substantially the same fundamental structure as the light guide plate 211 and the light guide plate 212, but have the outer shapes different from the light guide plates 211, 212.

More specifically, in regard with the light guide portion 310 structuring the illumination device 300, the light guide plate 311 is branched into four portions, or a branched portion 311', a branched portion 311 ", a branched portion 311"', and a branched portion 311"" by rendering an upper surface of the light guide plate 311 indented at three points in substantially the same way as the light guide plate 211. The light guide plate 311, as different from the light guide plate 211, has a higher height of an upper surface portion 311 G of the branched portion 311" and the branched portion 311"' than a height of an upper surface portion 311G' of the branched portion 311' and the branched portion 311"". The light guide plate 312 combined with the light guide plate 311 in an inserting manner is branched into four portions, or a branched portion 312', a branched portion 312", a branched portion 312"', and a branched portion 312"" by rendering an upper surface of the light guide plate 312 indented at three points in substantially the same way as the light guide plate 212. The light guide plate 312, as different from the light guide plate 212, has a higher height of an upper surface portion 312G of the branched portion 312" and the branched portion 312"' than a height of an upper surface portion 312G' of the branched portion 312' and the branched portion 312"".

As described above, according to the illumination device 300 of the third embodiment, in substantially the same way as in the second embodiment, the outer shape of the light emitting portion and light distribution characteristics can be freely selected by replacing the light guide portion 310 and the light source portion 220 held at the heat dissipating portion 230 by way of the holding portion 250 so as to meet the facility environments and user's desires. According to the illumination device 300 of the third embodiment, the plural light guide plates combined three-dimensionally in having different heights of the branched upper surface portions are arranged in the light guide portion 310, thereby rendering designing feature excellent and thereby suppressing differences of the light intensity profile depending on the angle of recognition by eyes. According to the illumination device 300 of the third embodiment, in substantially the same way as in the second embodiment, the surface area of the side surface portion at which the light is normally reflected in the interior of the light guide plate is increased by branching off the light guide plate in a plural number, so that the light is readily reflected in a multiple manner among the side surface portions. Therefore, the rate of the light discharged from the lower surface portion to the upper surface portion of the light guide plate is reduced, and the rate of the light converted into the diffused light with the recess and projected patterns is increased, so that light outputting efficiency can be improved.

### [Fourth Embodiment]

Hereinafter, structures according to an illumination device 400 through an illumination device 700 of the fourth embodiment of the invention are specifically described in reference to Fig. 13 through Fig. 16.

The illumination device 400 through the illumination device 700 of the fourth embodiment of the invention are characterized in that the lateral width of the light guide plate is formed to be increased, decreased, or increased and decreased, continuously or periodically from the lower surface toward the upper surface of the light guide plate, as different from the illumination device 200 and the illumination device 300 in which the thickness of the side surface portion of the branched light guide plate is equal notwithstanding its position in accordance with the second and third embodiments. The structures of the fourth embodiment other than those are substantially the same as the structures described in the second and third embodiments. In the fourth embodiment, the structures different from the second and the third embodiments are mainly described.

The illumination device 400 through the illumination device 700, as shown in Fig. 13 through Fig. 16, includes the light source portion 220, the heat dissipating portion 230, the power supply portion 240, and the holding portion 250, which have substantially the same specifications as those of the illumination device 200 in the second embodiment, and a light guide portion 410 through a light guide portion 710 respectively particular for the illumination device 400 through the illumination device 700 of the fourth embodiment. Hereinafter, the light guide portions 410 through 710 structuring the illumination device 400 through the illumination device 700 are described respectively.

The illumination device 400 as shown in Fig. 13 is formed with the light guide portion 410 combined with a light guide plate 411 and a light guide plate 412 formed so that four branched portions extending in a cross shape are in a trapezoid shape respectively. The light guide plate 411 is branched off to two portions, or a branched portion 411' and a branched portion 411" since a center of an upper surface portion 411 G of the light guide plate 411 is indented. The light guide plate 411 further is formed in the trapezoid shape so that the heights of the branched portion 411' and the branched portion 411" are inclined with respect to the holding portion 250 as to become lower from the circumference to the center of the illumination device 400. The light guide plate 412 combined by insertion to the light guide plate 411 has substantially the same shape as the light guide plate 411.

The illumination device 500 as shown in Fig. 14 is formed with the light guide portion 510 combined with a light guide plate 511 and a light guide plate 512 formed so that four upper surface portions formed in a cross shape are extending in an arc shape respectively. More specifically, the light guide plate 511 is branched off to two portions, or a branched portion 511' and a branched portion 511" since a center of an upper surface portion 511 G of the light guide plate 511 is indented. The light guide plate 511 further is formed in the arc shape so that the heights of the upper surface portion 511 G of the branched portion 511' and the branched portion 511" are curved with respect to the holding portion 250 as to become higher from the circumference to the center of the illumination device 500. The light guide plate 512 combined by insertion to the light guide plate 511 is formed in a half disc shape in which the height of an upper surface portion 512G is curved from the circumference toward the center of the illumination device 500.

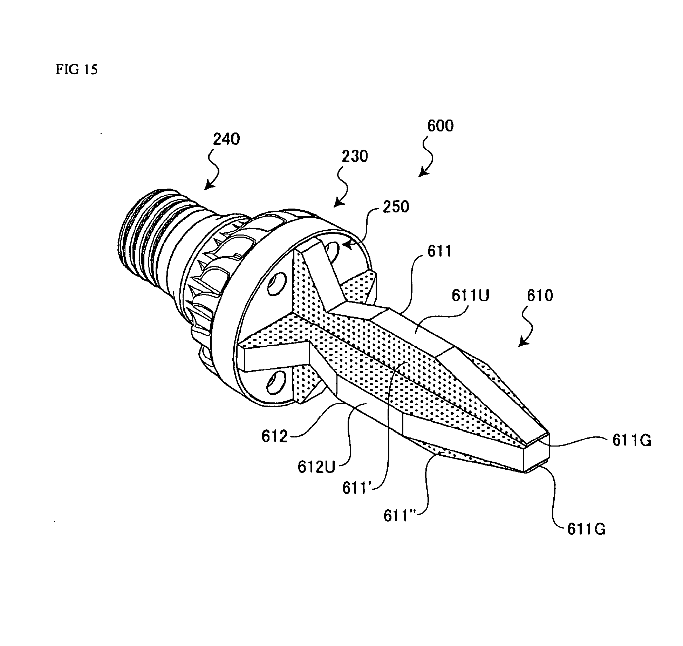

The illumination device 600 as shown in Fig. 15 is formed with the light guide portion 610 combined with a light guide plate 611 and a light guide plate 612 formed so that four side surface portions formed in a cross shape are extending in a polygon shape respectively. The light guide plate 611 is branched off to two portions, or a branched portion 611' and a branched portion 611" since a center of an upper surface portion 611G of the light guide plate 611 is indented. The light guide plate 611 further is formed in the polygon shape so that a side surface portion 611 U of the branched portion 611' is made of five surfaces continuous with respectively different angles. The branched portion 611" of the light guide plate 611 is formed in substantially the same shape to the branched portion 611' between the opposed surfaces. The light guide plate 612 combined by insertion to the light guide plate 611 is formed in the polygon shape so that side surface portions 612U oppositely provided are made of five surfaces continuous with respectively different angles.

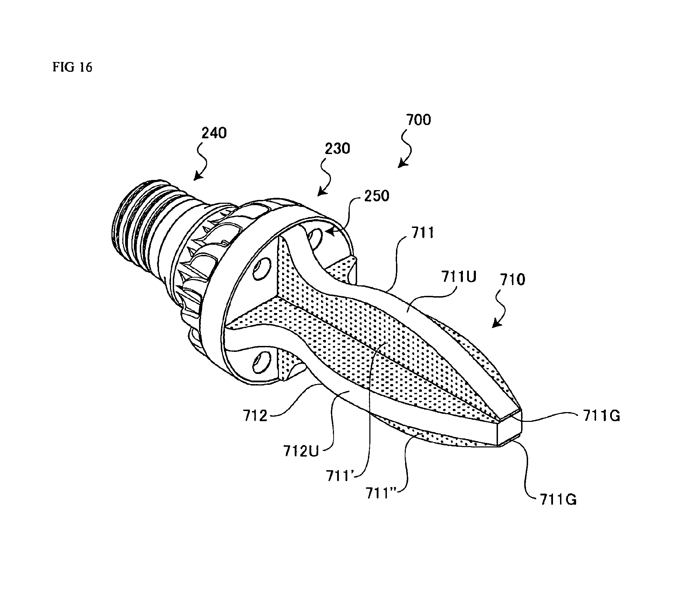

The illumination device 700 as shown in Fig. 16 is formed with the light guide portion 710 combined with a light guide plate 711 and a light guide plate 712 formed so that four side surfaces extending in a cross shape are in a streamline shape respectively. The light guide plate 711 is branched off to two portions, or a branched portion 711' and a branched portion 711" since a center of an upper surface portion 711 G of the light guide plate 711 is indented. The light guide plate 711 further is formed in the streamline shape so that a side surface711U of the branched portion 711' is fabricated in a curved shape. The branched portion 711" of the light guide plate 711 is formed in substantially the same shape to the branched portion 711' between the opposed surfaces. The light guide plate 712 combined by insertion to the light guide plate 711 is also formed in the streamline shape by fabricating two side surface portions 712U provided oppositely into the curved shape respectively.

As described above, according to the illumination device 400 through the illumination device 700 of the fourth embodiment, in substantially the same way as in the second and third embodiments, the outer shape of the light emitting portion and light distribution characteristics can be freely selected by replacing the light guide portion 410 through the light guide portion 710 and the light source portion 220 held at the heat dissipating portion 230 by way of the holding portion 250 so as to meet the facility environments and user's desires. According to the illumination device 400 through the illumination device 700 of the fourth embodiment, the light guide plates combined three-dimensionally and formed with the side surface portions in the polygon shape or the streamline shape are used in the light guide portion 410 through the light guide portion 710, thereby rendering designing feature very excellent and thereby suppressing differences of the light intensity profile depending on the angle of recognition by eyes. According to the illumination device 400 through the illumination device 700 of the fourth embodiment, the side surface portions of the light guide plates are formed in the polygon shape or the streamline shape to render the light easily reflected in a multiple manner in a randomly reflecting state between the side surface portions. Therefore, the rate of the light discharged from the lower surface portion to the upper surface portion of the light guide plate is reduced, and the rate of the light converted into the diffused light with the recess and projected patterns is increased, so that light outputting efficiency can be improved.

### [Fifth Embodiment]

Hereinafter, the structure according to the illumination device 800 of the fifth embodiment of the invention is described specifically in referring to Fig. 17.

The e illumination device 800 of the fifth embodiment of the invention is characterized in that recess patterns, projected patterns, or recess and projected patterns are formed even on upper surface portions and side surface portions of the light guide plates as different from the illumination device 200 through the illumination device 700 according to the second through fourth embodiments. The structures of the fifth embodiment other than those are substantially the same as the structures described in the second through fourth embodiments. In the fifth embodiment, the structures different from the second through fourth embodiments are mainly described.

As shown in Fig. 17, the illumination device 800 includes a light guide portion 810 constituted of a light guide plate 811 and a light guide plate 812. The outer shape of the light guide plate 811 is substantially the same as the light guide plate 211 of the light guide portion 210 disposed at the illumination device 200, and has an upper surface portion 811 G indented at three points, thereby branching the plate into four portions, or a branched portion 811', a branched portion 811", a branched portion 811"', and a branched portion 811"". Similarly, the light guide plate 812 has an upper surface portion 812G indented at three points, thereby branching the plate into four portions, or a branched portion 812', a branched portion 812", a branched portion 812"', and a branched portion 812"". To the contrary, the light guide plate 811 and the light guide plate 812 are formed with recess patterns, projected patterns, or recess and projected patterns even on the upper surface portion 811 G and the upper surface portion 812G as well as on a side surface portion 811 U and a side surface portion 812U.

As described above, the illumination device 800 according to the fifth embodiment, in substantially the same way as in the second through fourth embodiments, the outer shape of the light emitting portion and light distribution characteristics can be freely selected by replacing the light guide portion 810 and the light source portion 220 held at the heat dissipating portion 230 by way of the holding portion 250 so as to meet the facility environments and user's desires. According to the illumination device 800 of the fifth embodiment, the plural light guide plates formed with the patterns even on the upper surface portions and the side surface portions are provided in the light guide portion 810, thereby rendering very small differences of the light intensity profile depending on the angle of recognition by eyes. According to the illumination device 800 of the fifth embodiment, in substantially the same way as in the second embodiment and the like, the surface area of the side surface portion at which the light is normally reflected in the interior of the light guide plate is increased by branching off the light guide plate in a plural number, so that the light is readily reflected in a multiple manner among the side surface portions. Therefore, the rate of the light discharged from the lower surface portion to the upper surface portion of the light guide plate is reduced, and the rate of the light converted into the diffused light with the recess and projected patterns is increased, so that light outputting efficiency can be improved.

Finally, a manufacturing method for light guide plate disposed in the illumination device 100 through the illumination device 800 of the first through fifth embodiments of the invention is described in referring to Fig. 18 through Fig. 22 and any other.

For the manufacturing method for light guide plate, usable are, e.g., an ultrasound process, a heating process, a cutting process, a laser process, a molding process, and a screen printing. Hereinafter, respective manufacturing methods are described. In the ultrasound process, recess patterns are formed on the surface by partly melting the surface of the light guide plate using ultrasound vibrations from an ultrasound process horn contacted to the surface of the light guide plate. In the heating process, recess patterns are formed on the surface by partly melting the surface of the light guide plate using heat from the processing tool contacting to the surface of the light guide plate. Similarly, in the cutting process, recess patterns are formed on the surface by partly cutting off the surface of the light guide plate using a cutting tool rotating or urging upon contacting to the surface of the light guide plate. Similarly, in the laser process, recess patterns are formed on the surface by partly melting the surface of the light guide plate using heat from laser light converged on the surface of the light guide plate.

In regard with the manufacturing method for light guide plate, in the molding process, a shape reflecting the outer shape of a light guide plate to be formed is made in an interior of a mold; a resin heated and softened is injected into the mold attached to, e.g., an injection molding machine; and then, the resin is cooled, thereby forming recess patterns, projected patterns, or recess and projected patterns on the surfaces of the light guide plate. Similarly, in the screen printing, a plate opening prescribed holes is contacted with respect to the surface of the light guide plate to attach a setting type resin on the surface through the holes and to cover the surface with the resin partly, thereby forming the projected patterns on the surface.

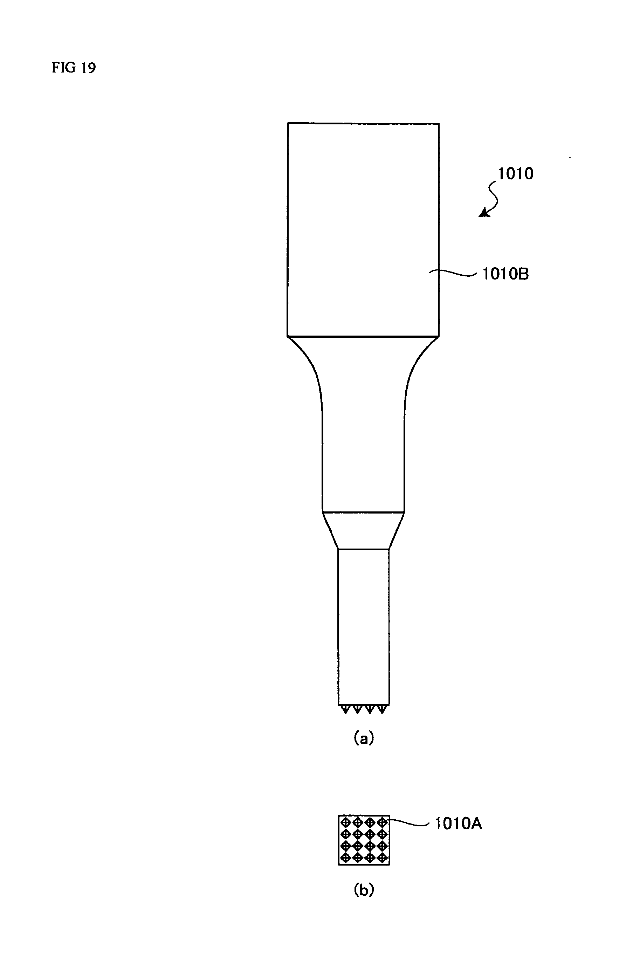

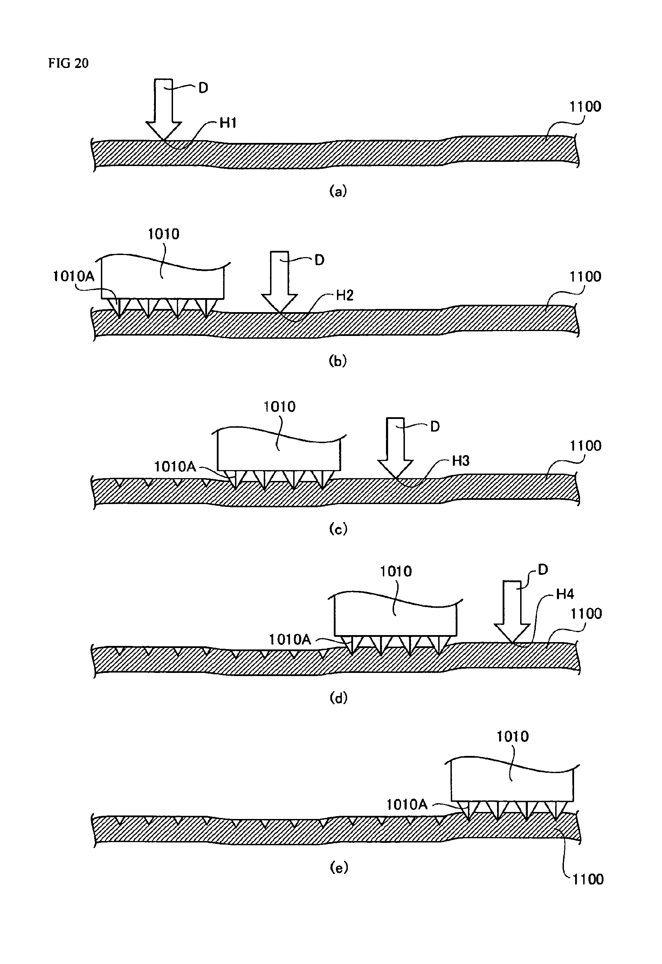

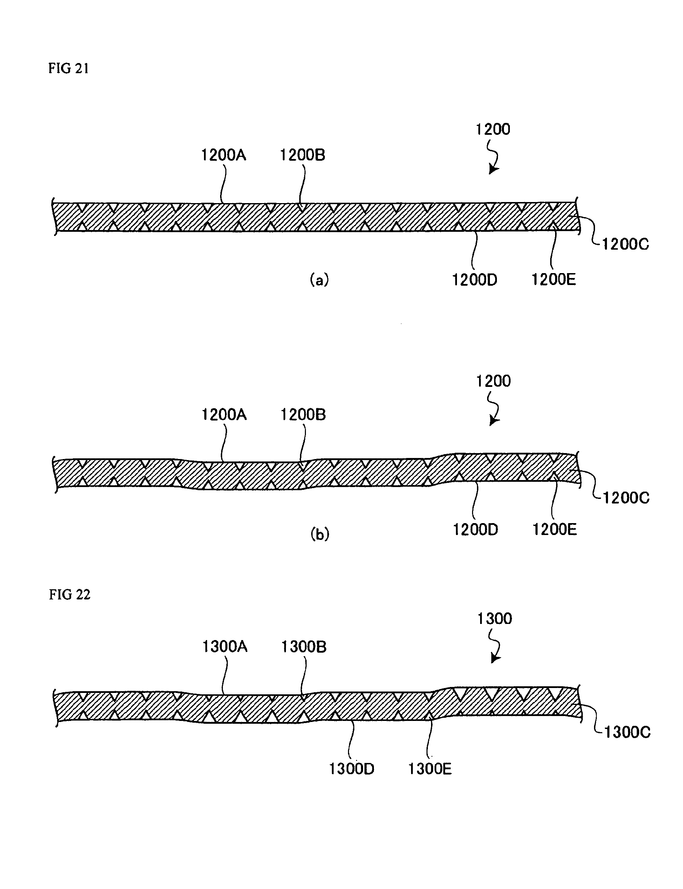

A manufacturing method for light guide plate using the ultrasound process is described in detail herein. First, the structure of an ultrasound process apparatus 1000, etc. is described in referring to Fig. 18 and Fig. 19. Subsequently, after formation of the recess pattern scars on a processing member 1100 by means of the ultrasound process apparatus 1000 is described in referring to Fig. 20, advantages of the formation of the recess pattern scars on the processing member 1100 by means of the ultrasound process apparatus 1000 is described in referring to Fig. 21 and Fig. 22.

First, in regard with the manufacturing method for light guide plate using the ultrasound process, the structure of the ultrasound process apparatus 1000, etc. is described in referring to Fig. 18 and Fig. 19.

The ultrasound process apparatus 1000 as shown in Fig. 18 includes a machine base 1020, a work table 1030, a transfer mechanism 1040, a vacuum pump 1050, an ultrasound oscillator 1060, and so on. As such an ultrasound process apparatus 1000, an ultrasound process apparatus filed as a utility model registration application by the same applicant to this invention's applicant and registered as No. 3140292 may be used. Such the ultrasound process apparatus 1000 may manufacture light guide plates by forming recess patterns on front surfaces, back surfaces, or front and back surfaces of the processing member 1100 by attaching a supporting portion 1010B of a processing tool 1010 as shown in Fig. 19 and by applying ultrasound vibrations to an ultrasound processing portion 1010A of the processing tool 1010.

The processing tool 1010 attached to the ultrasound process apparatus 1000 is an ultrasound process horn and includes the ultrasound processing portion 1010A arranged with dots in a matrix shape on a tip surface in a rectangular shape of the ultrasound process horn, and the supporting portion 1010B for supporting the ultrasound processing portion 1010A. In the ultrasound processing portion 1010A, the respective processing dots are formed in a rectangular pyramid shape. In Fig. 19(b), the ultrasound processing portion 1010A is depicted with processing dots arranged in a matrix of four columns and four rows as an example.

Reflection dots reflecting the processing dots formed on the ultrasound processing portion 1010A are formed on one major surface of the processing member 1100 by pressing the ultrasound processing portion 1010A of the processing tool 1010 to the one major surface of the processing member 1100. It is to be noted that the reflection dots are formed in a prescribed range on the one major surface of the processing member 1100 by repeating formations of the reflection dots upon correlatively transferring the processing tool 1010 with respect to the processing member 1100. The ultrasound processing portion 1010A of the processing tool 1010 is pressed to the one major surface of the processing member 1100 in a way such that at least one direction of a ridge's extension line of the rectangular pyramid shape of the processing dots is set substantially parallel to an incident direction of the light incoming from a side surface of the light guide plate 111 formed by processing the processing member 1100. A more specific method for forming recess pattern scars in consideration of shape deviations in the processing member 1100 is described below in referring to Fig. 20.

Next, in regard with the manufacturing method for light guide plate done by ultrasound process, formation of recess pattern scars on the processing member 1100 by the ultrasound process apparatus 1000 is described specifically in referring to Fig. 20.

In formation of recess pattern scars on the processing member 1100 by the ultrasound process apparatus 1000, as shown in Fig. 20(a), a processing start reference height H1 of the surface of the processing member 1100 is detected by rendering a movable type probe D disposed at a measuring portion, not shown, of the ultrasound process apparatus 1000 contact to the surface of the processing member 1100. A transparent methacrylate resin plate in a prescribed shape may be used for the processing member 1100. The probe D is not limited to a mechanical structure and may have, e.g., a structure receiving reflecting light from the surface of the processing member 1100 upon emitting a measuring light from a measuring portion, not shown, of the ultrasound process apparatus 1000.

As shown in Fig. 20(b), after the processing tool 1010 attached to the ultrasound process apparatus 1000 is moved to a position above the surface detecting the processing start reference height H1, ultrasound vibrations are applied to the ultrasound processing portion 1010A provided at the tip of the processing tool 1010 with the processing start reference height H1 as a reference, and the ultrasound processing portion 1010A is moved down to a prescribed depth from the processing start reference height H1. A processing start reference height H2 on a surface of the processing member 1100 serving as a subsequent ultrasound processing place is detected by the movable type probe D disposed at the measuring portion of the ultrasound process apparatus 1000.

As shown in Fig. 20(c), after the processing tool 1010 attached to the ultrasound process apparatus 1000 is moved to a position above the surface detecting the processing start reference height H2, ultrasound vibrations are applied to the ultrasound processing portion 1010A provided at the tip of the processing tool 1010 with the processing start reference height H2 as a reference, and the ultrasound processing portion 1010A is moved down to a prescribed depth from the processing start reference height H2. A processing start reference height H3 on a surface of the processing member 1100 serving as a subsequent ultrasound processing place is detected by the movable type probe D disposed at the measuring portion of the ultrasound process apparatus 1000.

As shown in Fig. 20(d), after the processing tool 1010 attached to the ultrasound process apparatus 1000 is moved to a position above the surface detecting the processing start reference height H3, ultrasound vibrations are applied to the ultrasound processing portion 1010A provided at the tip of the processing tool 1010 with the processing start reference height H3 as a reference, and the ultrasound processing portion 1010A is moved down to a prescribed depth from the processing start reference height H3. A processing start reference height H4 on a surface of the processing member 1100 serving as a subsequent ultrasound processing place is detected by the movable type probe D disposed at the measuring portion of the ultrasound process apparatus 1000.

Similarly as shown in Fig. 20(e), after the processing tool 1010 attached to the ultrasound process apparatus 1000 is moved to a position above the surface detecting the processing start reference height H4, ultrasound vibrations are applied to the ultrasound processing portion 1010A provided at the tip of the processing tool 1010 with the processing start reference height H4 as a reference, and the ultrasound processing portion 1010A is moved down to a prescribed depth from the processing start reference height H4.

Next, in regard with the manufacturing method for light guide plate done by ultrasound process, advantages from the formation of the recess pattern scars on the processing member 1100 by the ultrasound process apparatus 1000 is described specifically in referring to Fig. 21 and Fig. 22.

As advantages from the formation of the recess pattern scars on the processing member 1100 by the ultrasound process apparatus 1000, in a case that the processing member 1100 prior to formation to a light guide plate 1200 has no curving or unevenness in thickness as shown in Fig. 21 (a), front surface portion recess pattern scars 1200B having a constant depth with respect to the front surface portion 1200A can be formed regardless the position of the front surface portion 1200A of the light guide plate 1200 even without detecting any processing start reference height at each processing. In substantially the same way, back surface portion recess pattern scars 1200E having a constant depth with respect to the back surface portion 1200D can be formed regardless the position of the back surface portion 1200D of the light guide plate 1200.

As shown in Fig. 21 (b), in a case that the processing member 1100 prior to formation to the light guide plate 1200 has some curving or unevenness in thickness, front surface portion recess pattern scars 1200B having a constant depth with respect to the front surface portion 1200A can be formed because of the detection of the processing start reference height at each processing. In substantially the same way, back surface portion recess pattern scars 1200E having a constant depth with respect to the back surface portion 1200D can be formed because of the detection of the processing start reference height of the back surface portion 1200D at each processing.

As the processing member 1100 herein, e.g., a methacrylate resin plate is used. Such a methacrylate resin plate is manufactured by an extrusion method, and individual deviations in thickness of the methacrylate resin plate may reach approximately plus and minus one mm for having thickness eight mm as a reference value. Unevenness in thickness for a single methacrylate resin plate tends to be large, and more specifically, the difference between the maximum thickness and the minimum thickness may reach about 0.4 mm. The methacrylate resin plate may be deformed in a reversely warping manner upon absorption of moisture. Thus, the methacrylate resin plate suffers from deviations in the thickness component due to individual differences, unevenness in thickness, and deformation from warping or the like. To the contrary, the depth of the front surface portion recess pattern scars 1200B formed on the front surface portion 1200A of the light guide plate 1200 and the depth of the back surface portion recess pattern scars 1200E formed on the back surface portion 1200D of the light guide plate 1200 are frequently set to 0.3 mm to 0.5 mm.

Accordingly, in a case that the processing start reference height of the processing member 1100 is not detected although the processing member 1100 prior to formation to a light guide plate 1300 has some curving or unevenness in thickness, as shown in Fig. 22, front surface portion recess pattern scars 1300B having a constant depth cannot be formed on the front surface portion 1300A of the light guide plate 1300. Similarly, back surface portion recess pattern scars 1300E having a constant depth cannot be formed on the back surface portion 1300D of the light guide plate 1300. Therefore, it is required that after detecting the processing start reference height of the processing member 1100 with the movable type probe D attached to the measuring portion of the ultrasound process apparatus 1000 likewise processing of the processing member 1100 by means of the ultrasound process apparatus 1000 according to this invention, ultrasound vibrations are applied to the ultrasound processing portion 1010A provided at the tip of the processing tool 1010 with the processing start reference height H as a reference, and the ultrasound processing portion 1010A is moved down to a prescribed depth from the surface of the methacrylate resin plate.

### Description of Reference Numbers

- 100: Illumination Device
- 110, 110A, 110B: Light Guide Plate
- 111, 112, 113: Light Guide Plate
- 111A, 112A, 113A: Front Surface Portion
- 111B, 112B, 113B: Front Surface Portion Recess Pattern Scars
- 111C, 112C, 113C', 113C": Side Surface Portion
- 111D, 112D, 113D: Back Surface Portion
- 111E, 112E, 113E: Back Surface Portion Recess Pattern Scars
- 115: Reflection Tape
- 120: LED Unit
- 130: Housing
- 140: Screw Fitting
- 200, 300, 400, 500, 600, 700, 800: Illumination Device
- 210, 310, 410, 510, 610, 710, 810: Light Guide Portion
- 211, 212, 213, 311, 312, 411, 412,:
- 511, 512, 611, 612, 711, 712, 811, 812: Light Guide Plate
- 812""211', 211", 211"', 211"",:
- 212', 212", 212"', 212'''',:
- 311', 311'', 311''', 311"",:
- 312',312", 312''', 312"",:
- 411', 411", 511", 511", 611', 611",:
- 711', 711", 811', 811",:
- 811"',811"", 812', 812", 812"',: Branched Portion
- 211E, 212E: Joint Portion
- 211F, 212F, 213F: Lower Surface Portion
- 211G, 212G, 213G, 311G, 311G, 312G, 312G,:
- 411G, 511G, 512G, 611G, 711G, 811G, 812G: Upper Surface Portion
- 211H, 212H: Engaging Portion
- 211 P, 212P, 213N, 213R: Pattern
- 213S: End Portion
- 213M: One Major Surface
- 213Q: The Other Major Surface
- 611U, 612U, 711U, 712U, 811U, 812U: Side Surface Portion
- 220: Light Source Portion
- 221: Light Source
- 222: Board
- 222A: Hole
- 230: Heat Dissipating Portion
- 231: Heat Dissipating Member
- 231 A: Containing Portion
- 231B: Screw Hole
- 231C, 231C', 231C": Fin
- 240: Power Supply Portion
- 241: Power Supply Member
- 242: Housing
- 242A: One End
- 242B: The Other End
- 243: Power Supply Unit
- 250: Holding Portion
- 251, 251', 251": Holding Member
- 251'A, 251"A: Groove Portion
- 251'B, 251"B: Projection Portion
- 251'C, 251"C: Wall Portion
- 251'D, 251"D: Hole
- 252: Fastening Member
- 1010: Processing Tool
- 1010a: Ultrasound Processing Portion
- 1010b: Supporting Portion
- 1000: Ultrasound Processing Apparatus
- 1020: Machine Base
- 1030: Work Table
- 1040: Transfer Mechanism
- 1050: Vacuum Pump
- 1060: Ultrasound Oscillator
- 1100: Processing Member
- 1200, 1300: Light Guide Plate
- 1200A, 1300A: Front Surface Portion
- 1200B, 1300B: Front Surface Portion Recess Pattern Scar
- 1200C, 1300C: Side Surface Portion
- 1200D, 1300D: Back Surface Portion
- 1200E, 1300E: Back Surface Portion Recess Pattern Scar
- P1: Pitch
- P2: Half Pitch
- L1, L2, L3, L4: Incident Light
- L5: Reflection Light
- T1, T2, T3, T4, T5: Recess Pattern Scar
- E: Eyes
- D: Probe
- H1, H2, H3, H4: Processing Start Reference Height

### Aspects:

1. An illumination device comprising:
   a plurality of light guide plates formed with reflection dots in compliance with a shape of processing dots by pressing the processing dots in a matrix shape provided at an ultrasound processing horn;
   an LED light source for rendering LED light enter into the light guide plates; and
   a holding member for holding the LED light source,
   wherein the plural light guide plates are arranged to have a major surface having the reflection dots to be angled differently from a major surface of another light guide plate.
2. The illumination device according to Aspect 1, wherein the plural light guide plates are arranged to have the major surface having the reflection dots to be angled with a substantially right angle to the major surface of another light guide plate.
3. The illumination device according to Aspect 1, wherein the reflection dots of the light guide plate are formed on either or both of the major surfaces oppositely formed at the light guide plates.
4. The illumination device according to Aspect 1, wherein the reflection dots of the light guide plate are formed to have depths different in a stepwise manner on either or both of the major surfaces oppositely formed at the light guide plates.
5. The illumination device according to Aspect 1, wherein the reflection dots of the light guide plate are formed so as to be at the same positions or at shifted positions between major surfaces oppositely formed at each light guide plate.
6. The illumination device according to Aspect 1, wherein at least one extension direction of the ridges of a pyramid shape of the reflection dots of the light guide plate is extending parallel to an incident direction of the incoming light from a side surface of the light guide plate.
7. The illumination device according to Aspect 6, wherein the reflection dots of the light guide plate are formed in the pyramid shape.
8. An illumination device comprising:
   a light guide portion formed with a light guide plate branching in a plural number and having at least one surface formed with a recess pattern, a projected pattern, or a recess and projected pattern for outputting diffused light;
   a light source portion arranged adjacently to the light guide portion and formed with a light source for guiding light into an interior of the light guide plate from a lower surface toward an opposing upper surface of the light guide plate,
   a heat dissipating portion contacting to a back surface of the light source portion for absorbing and dissipating heat generated at the light source portion;
   a power supply portion electrically connected to the light source portion for supplying electric power to the light source portion; and
   a holding portion contacting to an end of the light source portion for detachably holding at least the light guide portion with respect to the heat dissipating portion.
9. The illumination device according to Aspect 8, wherein the light guide portion is branched off to at least two portions by partly recessing the upper surface of the light guide plate.
10. The illumination device according to Aspect 8, wherein the light guide portion is formed to have equal or different heights of the upper surface of the light guide plate being branched into at least two portions.
11. The illumination device according to Aspect 8, wherein the light guide portion is formed of a combination made by inserting the lower surface of one light guide plate into the partly recessed portion of the upper surface of another light guide plate.
12. The illumination device according to Aspect 8, wherein the light guide portion is arranged to have equal or different heights between one and another of the upper surfaces of the light guide plates.
13. The illumination device according to Aspect 8, wherein the light guide portion is arranged to have the light guide plate whose lateral width is formed to be successively or periodically increased, reduced, or increased and reduced.
14. The illumination device according to Aspect 8, wherein the light guide portion is formed with either of the recess pattern or the projected pattern provided on both of the light guide surface's surfaces opposing to each other in a manner that the patterns are the same position or not the same position.
15. The illumination device according to Aspect 8, wherein the light guide portion is formed with either of the recess pattern or the projected pattern provided on at least one surface of the light guide in a manner that the pattern becomes gradually deeper as approaching from the lower surface to the upper surface.
16. The illumination device according to Aspect 8, wherein the light guide plate is formed with the recess pattern on the surface thereof by ultrasound vibration of an ultrasonic processing horn contacting to at least one surface thereof from an ultrasonic fabrication for partly melting the surface thereof.
17. The illumination device according to Aspect 8, wherein the light guide plate is formed with the recess pattern on the surface thereof by heat of a processing tool contacting to at least one surface thereof from a heating fabrication for partly melting the surface thereof.
18. The illumination device according to Aspect 8, wherein the light guide plate is formed with the recess pattern on the surface thereof by using a cutting tool rotated or urged as contacting to at least one surface thereof from a cutting fabrication for partly cutting out the surface thereof.
19. The illumination device according to Aspect 8, wherein the light guide plate is formed with the recess pattern on the surface thereof by heat of laser beam converged onto at least one surface thereof from a laser fabrication for partly melting the surface thereof.
20. The illumination device according to Aspect 8, wherein the light guide plate is formed with the recess pattern, the projected pattern, or the recess and projected pattern on at least the surface thereof by forming, in an interior of a mold, a shape reflecting an outer shape of the light guide plate to be molded, from a molding fabrication for cooling a resin upon injecting the resin softened by heat application to the mold.
21. The illumination device according to Aspect 8, wherein the light guide plate is formed with the projected pattern on the surface thereof by contacting to at least one surface thereof a plate having prescribed openings to attach a setting type resin to the surface via the openings from a screen printing for partly covering the surface thereof with the resin.

## Claims

1. An illumination device comprising:
a light guide portion (210, 310, 410, 510, 610, 710, 810) formed with a light guide plate branching in a plural number and having at least one surface made with a recess pattern, a projected pattern, or a recess and projected pattern for outputting diffused light;
a light source portion (220) arranged adjacently to the light guide portion and formed with a light source for guiding light into an interior of the light guide plate from a lower surface toward an opposing upper surface of the light guide plate;
a heat dissipating portion (230) contacting to a back surface of the light source portion for absorbing and dissipating heat generated at the light source portion;
a power supply portion (240) electrically connected to the light source portion for supplying electric power to the light source portion; and
a holding portion (250) contacting to an end of the light source portion for detachably holding at least the light guide portion with respect to the heat dissipating portion.

2. The illumination device according to Claim 1, wherein the light guide portion (210, 310, 810) is branched off to at least two portions by partly recessing the upper surface of the light guide plate (211, 212, 311, 312, 811, 812).

3. The illumination device according to Claim 1 or Claim 2, wherein the light guide portion (210, 310, 810) is formed to have equal or different heights of the upper surface of the light guide plate (211, 212, 311, 312, 811, 812) being branched into at least two portions.

4. The illumination device according to Claim 1 or Claim 2, wherein the light guide portion (210, 310, 810) is formed of a combination made by inserting the lower surface of one light guide plate (212, 312, 812) into the partly recessed portion of the upper surface of another light guide plate (211, 311, 811).

5. The illumination device according to Claim 1 or Claim 2, wherein the light guide portion (210, 310, 810) is arranged to have equal or different heights between one and another of the upper surfaces of the light guide plates (211, 212, 311, 312, 811, 812).

6. The illumination device according to Claim 1 or Claim 2, wherein the light guide portion (410, 510, 610, 710) is arranged to have the light guide plate whose lateral width is formed to be successively or periodically increased, reduced, or increased and reduced from the lower surface to the upper surface of the light guide plate.

7. The illumination device according to Claim 1 or Claim 2, wherein the light guide portion (210, 310, 410, 510, 610, 710, 810) is formed with either of the recess pattern or the projected pattern provided on both of the light guide surface's surfaces opposing to each other in a manner that the patterns are the same position or not the same position.

8. The illumination device according to Claim 1 or Claim 2, wherein the light guide portion (210, 310, 410, 510, 610, 710, 810) is formed with either of the recess pattern or the projected pattern provided on at least one surface of the light guide in a manner that the pattern becomes gradually deeper as approaching from the lower surface to the upper surface.

9. The illumination device according to Claim 1 or Claim 2, wherein the light guide plate is formed with the recess pattern (1200B, 1200E) on the surface thereof by ultrasound vibration of an ultrasonic processing horn (1010) contacting to at least one surface thereof from an ultrasonic fabrication for partly melting the surface thereof.

10. The illumination device according to Claim 1 or Claim 2, wherein the light guide plate is formed with the recess pattern on the surface thereof by heat of a processing tool contacting to at least one surface thereof from a heating fabrication for partly melting the surface thereof.

11. The illumination device according to Claim 1 or Claim 2, wherein the light guide plate is formed with the recess pattern on the surface thereof by using a cutting tool rotated or urged as contacting to at least one surface thereof from a cutting fabrication for partly cutting out the surface thereof.

12. The illumination device according to Claim 1 or Claim 2, wherein the light guide plate is formed with the recess pattern on the surface thereof by heat of laser beam converged onto at least one surface thereof from a laser fabrication for partly melting the surface thereof.

13. The illumination device according to Claim 1 or Claim 2, wherein the light guide plate is formed with the recess pattern, the projected pattern, or the recess and projected pattern on at least the surface thereof by forming, in an interior of a mold, a shape reflecting an outer shape of the light guide plate to be molded, from a molding fabrication for cooling a resin upon injecting the resin softened by heat application to the mold.

14. The illumination device according to Claim 1 or Claim 2, wherein the light guide plate is formed with the projected pattern on the surface thereof by contacting to at least one surface thereof a plate having prescribed openings to attach a setting type resin to the surface via the openings from a screen printing for partly covering the surface thereof with the resin.

15. The illumination device according to Claim 1, wherein the light source of the light source portion is made of any of a light emitting diode, an organic light emitting diode, a fluorescent lamp, a cold cathode fluorescent lamp, and a neon tube, which emit in a color of white, red, orange, yellow, green, blue, navy, or violet or in a color of a combination of those.
